# EUROPÄISCHE PATENTSCHRIFT

(11) **EP 2 179 256 B1**
(45) Veröffentlichungstag und Bekanntmachung des Hinweises auf die Patenterteilung: **29.12.2010**
(21) Anmeldenummer: 07702368.7
(22) Anmeldetag: 19.01.2007
(51) Int. Cl.: G01G 21/24

(54) **WÄGEAUFNEHMER**
WEIGHING SENSOR
CAPTEUR DE PESEE

(30) Priorität: 19.01.2006 DE 102006002711
(43) Veröffentlichungstag der Anmeldung: 28.04.2010
(73) Patentinhaber: Wipotec Wiege- und Positioniersysteme GmbH, 67657 Kaiserslautern (DE)
(72) Erfinder: HAUCK, Timo, 67663 Kaiserslautern (DE)
(74) Vertreter: Mischung, Ralf
(86) Internationale Anmeldenummer: PCT/DE2007/000087
(87) Internationale Veröffentlichungsnummer: WO 2007/082513

(56) Entgegenhaltungen:
- DE-A1- 3 218 943
- DE-U1- 9 419 160

## Beschreibung

Die vorliegende Erfindung betrifft einen vorzugsweise monolithisch ausgebildeten Wägeaufnehmer, wie er insbesondere für Rotationsfüller oder Mehrkopfwaagen eingesetzt wird.

Derartige Wägeaufnehmer sind vorteilhaft kreisförmig angeordnet, wobei auf einem möglichst kleinen Teilkreis ein Maximum an Wägezellen unterzubringen versucht wird, um Bauraum einzusparen.

In der Getränkeindustrie sind Rotationsfüller, beispielsweise gemäß der DE 20304296 U1 bekannt, bei denen zahlreiche Abfüllstationen kreisförmig angeordnet sind und bedingt durch die kontinuierliche Abfüllung sehr hohe Produktdurchsätze erreichbar sind. Diese Abfüllmaschinen haben einen Füllkopf mit einer Durchflusssteuerung, welche die jeweilige gewünschte Menge des Abfüllgutes portioniert.

Für rieselfähiges Schüttgut sind Volumenrotationsfüller bekannt. Der Füllkopf wird entsprechend der Dichte des zu füllenden Gutes eingestellt und ein konstantes Volumen in den entsprechenden Abfüllbehälter geleitet. Der Nachteil dieser Abfüllanlagen liegt in der Dichteschwankung der zugeführten Produkte. Waschmittel kann z.B. aus dem Silo oder direkt aus der Beflockungsanlage zur Abfüllanlage geleitet werden und so durch die unterschiedlichen Schütthöhen eine unterschiedliche Dichte aufweisen. Weiter sind durch die Ausgestaltung der volumetrisch arbeitenden Füllköpfe die Volumenbereiche und damit die Gewichtsbereiche des abzufüllenden Füllguts begrenzt, d.h. solche Anlagen lassen sich nur mit einem begrenzten Messbereich betreiben. Volumetrisch arbeitende Rotationsfüller besitzen meist eine nachgeschaltete Kontrollwaage, welche das Abfüllgewicht der Packungen kontrolliert und die Füllkopfmenge entsprechend nachjustiert. Der Nachteil dieser Abfüllanlagen liegt in der relativ weit vom eigentlichen Abfüllprozess entfernten Kontrollwägung, welche einen höheren Ausschuss der fehlgewichtigen Produkte aufgrund der zeitlichen Verzögerung der nachgeschalteten Kontrollwaage mit sich bringt.

Nach dem Stand der Technik sind Rotationsfüller bekannt, welche auf der Wägetechnik mittels DMS beruhen. Hierbei zeigt sich der Nachteil der langen Einschwingzeit der DMS Wägezelle mit Lastaufnahme. Diese Eigenschaft wird durch die Rotation des kompletten Füllkopfes noch verstärkt. Außerdem weisen DMS Wägezellen eine Durchbiegung bei zunehmender Last auf, welche beispielsweise im Stand der Technik mit einer zusätzlichen Korrekturzelle behoben werden muss (DE 372 78 66 C2).

Bei einem Einbau der Wägetechnik in den Kopf einer rotatorisch arbeitenden Abfüllmaschine mit kreisförmigem Grundaufbau zeigen sich die Problematiken bei den Einbauverhältnissen einer Messzelle. Die nach dem Stand der Technik gebräuchlichen Wägezellen haben ein quaderförmiges Gehäuse, beim Einbringen in einen Teilkreis erkennt man, dass der kleinstmögliche Teilkreisdurchmesser durch die geometrische Form der Messzelle stark eingeschränkt wird.

Auch die nach dem Stand der Technik in EP 1 409 971 B 1 aufgezeigten Wägezellen mit einer. breiten Festlandanschraubung und einer trapezförmig verlaufenden Parallelogrammführung sind nicht für die Aufnahme in einen Teilkreis geeignet.

Die EP 518202 B 1 offenbart einen Wägeaufnehmer, bei dem die einzelnen Funktionseinheiten des Blocksystems mittels dünner Schnitte herausgearbeitet sind. Die Abbildungen zeigen einen schmal aufgebauten Wägeaufnehmer, es besteht aber wieder das Problem, dass die größte Breite des Systems das kraftkompensierende Magnetsystem darstellt und dies wie im Stand der Technik bekannt gegenüber der Lastaufnahmeseite liegt. Der Teilkreisdurchmesser wird also auch hier maßgeblich durch die Magnetanordnung bestimmt.

Einen weiteren Nachteil bringen die Längenabmessungen der Wägezellen mit sich. Der

Stand der Technik führt Wägezellen auf, die einen parallelogrammgeführten Lastaufnehmer aufweisen, wobei zwischen den oberen und unteren Parallelogrammlenkern das elastische Getriebe ausgeführt ist, welches eine beaufschlagte Kraft in ihrer Größe reduziert. Der Stand der Technik führt dabei verschiedene Wägeaufnehmer mit bis zu 4 Übersetzungsstufen auf, wobei sehr hoch übersetzte Systeme mit bis zu 1500:1 vornehmlich in statischen Applikationen zu finden sind.

Die nach dem Stand der Technik bekannten Wägeaufnehmer sind mit einem Kompensationshebel ausgeführt, welcher bis zu dem Kompensationssystem verlängert wird. Im Falle der elektromagnetischen Kraftkompensation ist dies ein System, bestehend aus Spule und einem Permanentmagnetsystem. Der Magnet ist - wie bspw. in der DE 19923207 C1 beschrieben - hinter dem untersetzenden Getriebe angeordnet. An dem feststehenden Teil sind unter anderem die oberen und unteren Parallelogrammlenker für die bewegliche Lastaufnahme ausgeführt.

Der Stand der Technik stellt bei zerspanend gefertigten monolithischen Wägesystemen also eine räumlich hintereinander liegende Anordnung von Lastaufnahme, Übersetzungshebel, feststehendem Grundkörper und Magnetsystem dar. Weiter zeigt uns der Stand der Technik einen von Blockmaterial umbauten Magneten, um eine hohe Messgenauigkeit des Systems zu erreichen. Für den Fachmann ist hier erkennbar, dass ein solches System für eine kreisförmige Anordnung mit dem Ziel eines möglichst kleinen Teilkreisdurchmessers nicht geeignet ist.

Eine Ausführung mit einem zwischen den beiden Parallelogrammträgern angeordneten Magneten (bspw. in der DE 3243350 C2) kann zwar platzsparend angeordnet werden, jedoch beschränkt das Hebelgesetz und die begrenzte Übersetzung des Systems bei dieser Anordnung den Einsatz auf einen sehr eingeschränkten Gewichtsbereich.

Für die Eignung eines Wägeaufnehmers nach dem Prinzip der elektromagnetischen Kraftkompensation in einer kreisförmigen Anordnung ist die Ausbildung einer möglichst schmalen Bauform der Wägezelle wesentlich. Der Nachteil einer solchen Ausführung liegt in der Schwächung des Robervalgetriebes hinsichtlich Torsion senkrecht zur Krafteinleitung in Querrichtung das Blocksystem durchlaufend. Aus dem Stand der Technik ist bekannt, dass monolithisch ausgebildete Wägeaufnehmer zwischen der Lastaufnahme und dem ersten Hebel (und den weiteren Übersetzungshebeln) vorteilhaft mit einem Koppelelement, bestehend aus einem Zwischensteg und zwei Dünnstellen, ausgebildet sind. Weiter wird im Stand der Technik vorteilhaft ausgeführt, dass eine Dünnstelle in der ersten Koppelstange in Längsrichtung des Lastaufnehmers ausgeführt ist, um Torsionsmomente auf die Übersetzungshebel zu vermeiden. Als Beispiel sei hier auf die Schrift EP 291 258 A2, speziell Abbildung 2, verwiesen.

Die Kombination eines schmalen Robervalgetriebes (zur Zwangsparallelführung der Lastaufnahme) und der genannten aufgeführten Dünnstelle führt zu einem wenig torsionssteifen Wägeaufnehmer bei exzentrischer Krafteinleitung in Blockquerrichtung. Deshalb wurde in der EP 1550849A2 aufgeführt, den Parallelogrammlenker entsprechend breiter als das Blocksystem auszuführen, was einen erheblichen Mehraufwand gegenüber dem ursprünglich primär zweidimensional ausgeführten Wägeaufnehmer darstellt.

Aufgabe der Erfindung ist es angesichts der vorgenannten Nachteile, einen Wägeaufnehmer zu schaffen, der (im Hinblick auf den Abstand zwischen Lastaufnehmer und Festland) möglichst kurz ausgebildet ist. Gleichzeitig soll die Bauweise möglichst schmal bzw. kompakt ausfallen und eine ausreichende, aber sichere und von Störkräften weitgehend befreite und ausreichende Übersetzung bieten. Dabei soll auf einem möglichst kleinen Teilkreis ein Maximum an Wägezellen vorsehbar sein.

Die Aufgabe wird gelöst durch einen Wägeaufnehmer nach Anspruch 1.

Die Erfindung geht dabei von der Erkenntnis aus, dass die Breite der Wägezellen nach dem Stand der Technik im Wesentlichen von den Komponenten für die Kraftkompensation bestimmt werden, insbesondere von einer oder mehreren Spulen und den damit zusammenwirkenden Magneten. Bei dem erfindungsgemäßen Wägeaufnehmer werden diese Komponenten in radialer Richtung möglichst weit nach außen bzw. vom Zentrum weg verlagert. Sofern der zusammen mit anderen Wägeaufnehmern kreisförmig anzuordnende Wägeaufnehmer mit seinem unbewegten Grundkörper (Festland) zum Kreismittelpunkt weist, werden die Komponenten des Kraftkompensationssystems in radialer Richtung möglichst weit nach außen und von diesem Festland weggeführt, also in Richtung auf den am äußeren Umfang angeordneten Lastaufnehmer des Wägeaufnehmers.

Dadurch wird erfindungsgemäß auch eine Gestalt des Wägeaufnehmers ermöglicht, der in der Draufsicht bspw. im Wesentlichen rechteckige Form hat. Das Kraftkompensationssystem ist dabei zu einer Schmalseite des Rechtecks hin verlagert. Da es außerdem über die Längsseiten der rechteckigen Form hinaus ragt, weist der Wägeaufnehmer insgesamt einen etwa trapezförmigen Umriss auf. Dieser Umriss verjüngt sich dabei zum gedachten Kreismittelpunkt hin. Der in radialer Richtung nach außen weisende Lastaufnehmer kann außerdem auch eine größere Breite haben als der zum Zentrum hin weisende Grundkörper (bzw. das Festland), so daß sich die Trapezform bereits daraus konstruktiv ergibt. Die Komponenten des Kraftkompensationssystems, insbesondere die Spule und der Magnet, sind dann erfindungsgemäß in den Bereich des Lastaufnehmers verlagert, der durch seine größere Breite auch die Aufnahme dieser relativ großen Komponenten erlaubt.

Dies gestattet eine besonders kompakte Bauform des Wägeaufnehmers bei ausreichend hoher Übersetzung, da eine Reihe von mindestens zwei Hebeln vorgesehen ist, wobei die Hebel ggfls. durch Koppelelemente miteinander verbunden sind. Anders als beim bekannten Stand der Technik, bei dem das Kraftkompensationssystem oft jenseits des Grundkörpers (zum Kreismittelpunkt hin) oder wenigstens nahe bei dem Grundkörper angeordnet ist, gestattet diese Ausführung in radialer Richtung eine besonders kurze und platzsparende Form.

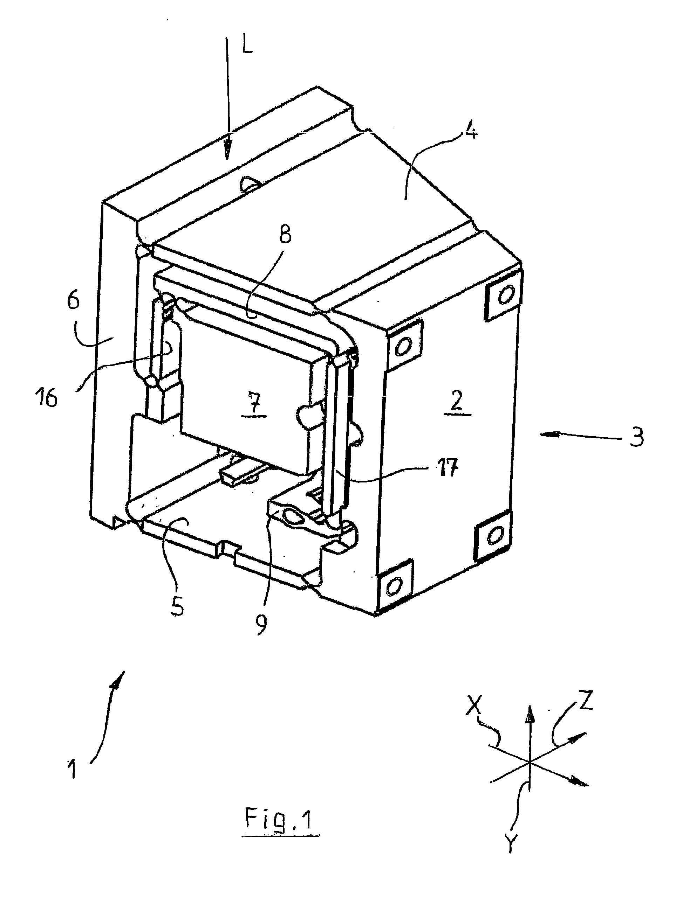

Insbesondere ist erfindungsgemäß vorgesehen, dass die Reihe von Hebeln und Koppelelementen einen zwischen die Parallelführungselemente hervorkragender Abschnitt des Grundkörpers wirkungsmäßig umläuft, um dadurch den inneren Bauraum des monolithischen Blocks gut auszunutzen. Mit Blick in Richtung Z (siehe auch Fig. 1 - 6) umlaufen dabei die Hebel bzw. die Koppelelemente den vorkragenden Abschnitt längs der Richtung X und Y. Dies erlaubt die Ausbildung möglichst langer Hebel bzw. Hebelarme bei insgesamt doch möglichst kurzer Bauform.

Dabei kann wenigstens ein Hebel bzw. Koppelelement (in Richtung Z gesehen) zum Beispiel auf einer oder beiden Seiten des vorkragenden Grundkörper-Abschnitts vorbeigeführt werden. Dabei ist ausdrücklich auch die asymmetrische Führung eines Hebels bzw. Koppelelements auf nur einer Seite des vorkragenden Abschnitts denkbar. In jedem Fall wird erfindungsgemäß das Ziel erreicht, Bauraum bestmöglich auszunutzen und dabei insgesamt so kompakt wie möglich zu bleiben. Denkbar ist dafür auch, seitlich des vorkragenden Abschnitts einen oder mehrere Hebel anzuordnen bzw. an dem vorkragenden Abschnitt abzustützen. Maßgeblich für den erfindungsgemäßen Vorteil ist die Anordnung der Hebel bzw. Koppelelemente derart, dass deren Kraftfluss den in X-Richtung vorkragenden Abschnitt umläuft, um dann wieder in den Bereich des Lastaufnehmers zurückgeführt zu werden.

Eine einfachste Ausführungsform der Erfindung sieht einen vorzugsweise monolithisch ausgebildeten Wägeaufnehmer vor, der für eine elektronische Waage nach dem Prinzip der elektromagnetischen Kraftkompensation ausgebildet ist. Der Wägeaufnehmer erstreckt sich in drei zueinander jeweils senkrechte Richtungen X, Y und Z.

Wie insbesondere anhand der Figuren deutlich werden wird, liegen der Lastaufnehmer und der feststehende Grundkörper (Festland) im Wesentlichen in Richtung X zueinander beabstandet, wobei diese Richtung X auch der radialen Richtung entspricht, längs derer sich der Wägeaufnehmer vom Zentrum weg erstreckt, wenn er kreisförmig mit weiteren Wägeaufnehmern angeordnet wird. Die dazu senkrechte Richtung Y bestimmt die Lasteinleitungsrichtung, die typischerweise senkrecht von oben nach unten bzw. vertikal ausgebildet ist und der Gravitation folgend zur Erde gerichtet ist. Senkrecht dazu (und bei einer kreisförmigen Anordnung in Umfangsrichtung) verläuft die dritte Richtung Z.

Der Wägeaufnehmer weist einen Abschnitt eines feststehenden Grundkörpers auf, an dem Parallelführungselemente angelenkt sind. Die Parallelführungselemente erstrecken sich im Wesentlichen längs der Richtung X und führen einen in Messrichtung Y beweglichen Lastaufnehmer relativ zum Grundkörper.

Weiterhin ist erfindungsgemäß ein zwischen die Parallelführungselemente hervorkragender Abschnitt des Grundkörpers vorgesehen, der zur Abstützung von Hebeln oder auch zur Aufnahme von Komponenten des Kompensationssystems Verwendung finden kann. Insbesondere die Anordnung von Komponenten des Kompensationssystems an diesem vorkragenden Abschnitt erlaubt eine wesentlich kompaktere Bauform gegenüber dem Stand der Technik.

Außerdem ist eine Reihe von wenigstens zwei wirkungsmäßig hintereinander geschalteten Hebeln vorgesehen, die zur Übertragung und/oder Übersetzung einer in den Lastaufnehmer einwirkenden Last Verwendung finden. Sie leiten diese Last hin zu dem Kraftkompensationssystem und umlaufen dabei den vorkragenden Abschnitt des Grundkörpers. An einem Hebelarm des letzten Hebels der genannten Reihe sei erfindungsgemäß wenigstens eine Komponente des Kraftkompensationssystems angeordnet, also ein Magnet, eine Spule oder Teile des Positionsdetektionssystems.

Der Kern der Erfindung liegt nun darin, dass wenigstens eine der genannten Komponenten (Magnet, Spule oder Positionsdetektionssystem) in X-Richtung nahe bei, zumindest aber näher an dem Lastaufnehmer als an dem Grundkörperabschnitt angeordnet ist. Dadurch wird die Lage des Kraftkompensationssystems derart festgelegt, dass es in X-Richtung von dem das Festland bildenden Abschnitt des Grundkörpers einen ausreichenden bzw. bestmöglichen Abstand in Richtung auf den Lastaufnehmer einnimmt.

Durch das Umlaufen des vorkragenden Abschnitts wird dabei Bauraum für große Hebellängen optimal genutzt. Außerdem erlaubt diese Ausführung vorteilhaft neben einer bspw. rechteckigen Grundform des Wägeaufnehmers alternativ auch einen Aufnehmer mit zunehmender Breite in Richtung auf den Lastaufnehmer. In diesem Fall wird das mitunter Raum einnehmende Kraftkompensationssystem im Wesentlichen vom Umriss des Wägeaufnehmers umfasst bzw. darin aufgenommen. In jedem Fall wird eine besonders kompakte Bauweise bei ausreichend großer Übersetzung gewährleistet, da wenigstens zwei Übertragungs- bzw. Übersetzungshebel vorgesehen sind, um die eingeleitete Last weiterzuleiten bzw. zu übersetzen. Das aus dem Stand der Technik bekannte Ziel, das Kraftkompensationssystem möglichst in der Nähe des Festlands bzw. auf seiner vom Lastaufnehmer abgewandten Seite anzuordnen, wird dabei bewusst aufgegeben. Im Sinne einer möglichst kurzen Bauweise wird das Kraftkompensationssystem stattdessen zwischen dem Festland und dem Lastaufnehmer angeordnet und zwar so, dass es einen möglichst großen Abstand in X-Richtung zu dem das eigentliche Festland bildenden Grundkörper einnimmt.

Es sei angemerkt, dass ein oder mehrere Hebel auch zur einfachen Weiterleitung (ohne Kraftübersetzung) der Gewichtskraft dienen können, in dem die Hebelarme beispielsweise gleichlang ausgebildet werden. Insbesondere wäre es also denkbar, einen im Wesentlichen in X-Richtung verlaufenden Hebel ohne Übersetzungswirkung vorzusehen, während ein in die entgegengesetzte Richtung verlaufender Hebel zur Bewirkung einer Kraftübersetzung unterschiedlich lange Hebelarme aufweisen könnte. Zwar bleibt damit die Übersetzungsleistung unter ihren Möglichkeiten, jedoch wird auch dadurch die erfindungsgemäße Anordnung der Kraftkompensationskomponenten in der Nähe des Lastaufnehmers ermöglicht.

Nach einer weiteren Ausführungsform der Erfindung erstreckt sich der zweite oder ein weiterer, in Kraftflussrichtung nachfolgend angeordneter Hebel von seinem ersten zu einem zweiten Ende, wobei das erste Ende dem Grundkörperabschnitt zugewandt ist, der auch die Parallelführungselemente trägt (nicht der vorkragende Abschnitt des Grundkörpers). Der Hebel erstreckt sich erfindungsgemäß im Wesentlichen in X-Richtung zu seinem zweiten Ende hin, welches dem Lastaufnehmer zugewandt ist. Erfindungsgemäß soll dieser Hebel in Kraftflussrichtung der letzte sein, der sich im Wesentlichen in X-Richtung erstreckt. Es soll also insbesondere kein weiterer nachfolgender Hebel vorgesehen sein, der sich etwa wieder in die entgegengesetzte X-Richtung, also in Richtung auf das Festland des Grundkörpers erstreckt. (Ein im Wesentlichen in Y-Richtung verlaufender nachfolgender Hebel, z.B. auch ein Winkelhebel, ist dagegen durchaus möglich, da dieser die X-Position des Kraftkompenationssystems nur unwesentlich bestimmt.)

Vorzugsweise ist dieser Hebel der zweite und zugleich letzte des Wägeaufnehmers. Dabei führt ein erster Hebel vom Lastaufnehmer (gestützt auf den vorkragenden Abschnitt des Grundkörpers) in Richtung auf den eigentlichen Grundkörper, während der zweite Hebel (beispielsweise parallel dazu) wieder zurück in Richtung auf den Lastaufnehmer geführt wird. Durch diese beiden Hebel lässt sich bereits ein sehr hohes Übersetzungsverhältnis erreichen, was bei einer Ausführung mit nur einem Hebel nicht möglich wäre. Zur Erreichung eines möglichst hohen Übersetzungsverhältnisses wird der zweite Hebel möglichst lang ausgeführt werden, um an seinem Ende einen Magneten oder eine Spule anzuordnen. Entsprechend wird dieser Magnet oder diese Spule, da sich der Hebel vom vorbeschriebenen Grundkörperabschnitt weg in Richtung auf den Lastaufnehmer erstreckt, möglichst nahe bei letzterem zu liegen kommen. Dies gestattet die bereits beschriebene kurze bzw. kompakte Bauform bei hoher Übersetzung.

Eine weitere vorteilhafte Ausführungsform der Erfindung sieht vor, dass wenigstens ein Hebel aus der Reihe der Kraftübersetzungs- bzw. Übertragungshebel ein Winkelhebel ist. Ein derartiger Hebel lenkt die zu übertragende Kraft aus der X-Richtung in die Y-Richtung um bzw. umgekehrt. Dies erlaubt die Hintereinanderschaltung mehrerer Hebel auf engem Raum.

Insbesondere kann auch der in Kraftflussrichtung letzte Hebel ein Winkelhebel sein. Vorteilhafterweise wird sich dieser Winkelhebel an dem vorkragenden Abschnitt des Grundkörpers abstützen. Durch Verwendung eines solchen Winkelhebels sind unterschiedliche Ausrichtungen der von dem Hebel getragenen Komponente des Kraftkompensationssystems möglich. So kann die Spule bzw. der Magnet im Wesentlichen waagerecht liegen (Spulen- oder Magnetachse verläuft in Y-Richtung) oder auch senkrecht (Achse verläuft in X-Richtung). Dies gewährleistet zusätzliche Freiheit bei der Unterbringung der Komponenten in der Nähe des Lastaufnehmers.

Um den Abstand zwischen Kraftkompensationskomponente und Festland weiter zu erhöhen, kann der in Kraftflussrichtung letzte Hebel sogar in eine Ausnehmung des Lastaufnehmers hinein oder sogar durch diese Ausnehmung hindurch ragen. Dadurch wird die Ausdehnung des Hebels in X-Richtung nicht durch den Lastaufnehmer behindert, vielmehr wird dadurch zusätzliche Hebelarmlänge gewonnen, die zur Anordnung von Kraftkompensationskomponenten Verwendung finden kann. Entsprechend kann eine oder mehrere dieser Komponenten ebenfalls in die Ausnehmung des Lastaufnehmers hinein- bzw. durch diese hindurch ragen.

Zunächst wird die ursprünglich in den Lastaufnehmer eingebrachte Gewichtskraft also (nach beispielsweise zweifacher Übersetzung und Führung um den vorkragenden Abschnitt des Grundkörpers herum) wieder in den Bereich des Lastaufnehmers zurückgeführt und dort durch das Kraftkompensationssystem kompensiert. Die besonders geschickte Bauform mit Ausnehmung im Lastaufnehmer verringert weiterhin die nötige Ausdehnung des gesamten Wägeaufnehmers in X-Richtung. Denkbar ist sogar auch, den Hebel bzw. die von ihm getragenen Komponenten auf der von dem Festland abgewandten Seite des Lastaufnehmers anzuordnen. Der Hebel kann also vollständig durch den Lastaufnehmer hindurch ragen (bei kreisförmiger Anordnung der Wägeaufnehmer wäre dies die radial nach außen gewandte Seite des Lastaufnehmers), um zusätzliche Hebelarmlänge zu nutzen.

Weiterhin kann gemäß einer weiteren Ausführungsform der Erfindung auch der vorkragende Abschnitt des Grundkörpers bis in oder durch eine Ausnehmung des Lastaufnehmers geführt werden. In diesem Fall erstreckt sich auch der vorkragende Abschnitt des Grundkörpers weitest möglich in Richtung auf den Lastaufnehmer, um dort Lagerstellen zu bilden für abzustützende Hebel oder auch für eine Komponente des Kraftkompensationssystems. Dies ergibt einen weiter optimierten Kompromiss von maximalem Hebelarm bei möglichst geringer Gesamtbaulänge, da Lastaufnehmer und vorkragender Abschnitt nunmehr teilweise ineinander liegen können.

Die Wägeaufnehmer nach dem Prinzip der elektromagnetischen Kraftkompensation verfügen zweckmäßigerweise über ein Positionsdetektionssystem, welches die Auslenkung des in Kraftflussrichtung letzten Hebels erfassen soll, um diese in bekannter Weise durch geeigneten Spulenstrom zu kompensieren.

Nach einer weiteren Ausführungsform der Erfindung ist ein solches Positionsdetektionssystem in einer Ausnehmung des Lastaufnehmers, an dem vorkragenden Abschnitt des Grundkörpers oder an einem Magneten bzw. einer Spule angeordnet. Insbesondere die Anordnung in einer Ausnehmung des Lastaufnehmers spart dabei Bauraum ein und führt vorteilhaft zu einer kompakteren Bauform des Wägeaufnehmers. Darüber hinaus ist das Positionsdetektionssystem leicht von außen zugänglich, wenn die Ausnehmung den Lastaufnehmer vollständig durchdringt.

Weiterhin vorteilhaft ist vorgesehen, dass der in Kraftflussrichtung letzte Hebel zur Aufnahme wenigstens eines vorzugsweise rotationssymmetrischen Ausgleichsgewichts ausgebildet ist. Durch ein solches Ausgleichsgewicht wird ein bestimmter Belastungszustand des Wägeaufnehmers ausgeglichen. Das Gewicht kann dabei vorteilhaft umso geringer ausfallen, je länger der zugehörige Hebelarm ausfällt, an dem es angeordnet ist.

Ein rotationssymmetrisches Gegengewicht für einen Hebelarm hat unabhängig von den vorgenannten speziellen Ausführungsformen des Wägeaufnehmers den Vorteil, dass es einfach zu fertigen ist und durch Befestigung seiner Achse eindeutig (weil rotationssymmetrisch) ausgerichtet ist. Auch bleibt der Schwerpunkt immer auf seiner Achse. Durch Veränderung der Höhe des Gewichtskörpers längs seiner Achse lässt sich das Gewicht als solches verändern, ohne den Schwerpunkt aus der Achse fortzubewegen. Sofern das Gewicht - wie nachstehend zu sehen sein wird - mit einem Anschlag zusammenwirkt, kann dieser Anschlag als ebenfalls rotationssymmetrische Ausnehmung vorgesehen werden, innerhalb derer das Gewicht zu liegen kommt. Es kann dann als Anschlag in zwei zueinander senkrechte Richtungen verwendet werden, wobei der Abstand zwischen Gegengewicht und Anschlag dann ein Kreisring ist.

In Verbindung mit den vorgenannten speziellen Ausführungsformen, aber auch unabhängig davon, bietet sich die Anordnung eines solchen Gewichts am Ende des (vorzugsweise letzten) Hebels eines Wägeaufnehmers an. Weiterhin kann dieser Hebel vorzugsweise bis in eine Ausnehmung des Lastaufnehmers hineinragen, um Bauraum zu sparen. Grundsätzlich ist auch die Anordnung mehrerer Ausgleichsgewichte denkbar, von denen wenigstens eines im Bereich einer solchen Ausnehmung angeordnet sein kann. Sofern auch hier die Ausnehmung den Lastaufnehmer vollständig durchdringt, kann das Ausgleichsgewicht leicht von außen angebracht bzw. ausgerichtet werden und sogar vollständig auf der dem Grundkörper abgewandten Seite des Lastaufnehmers liegen. Dieser auch allgemein für unterschiedlichste Waagen neuartige Gedanke lässt sich vorteilhaft auch mit einer der vorgenannten Ausführungsformen kombinieren und erleichtert deren angestrebte einfache und kompakte Bauweise.

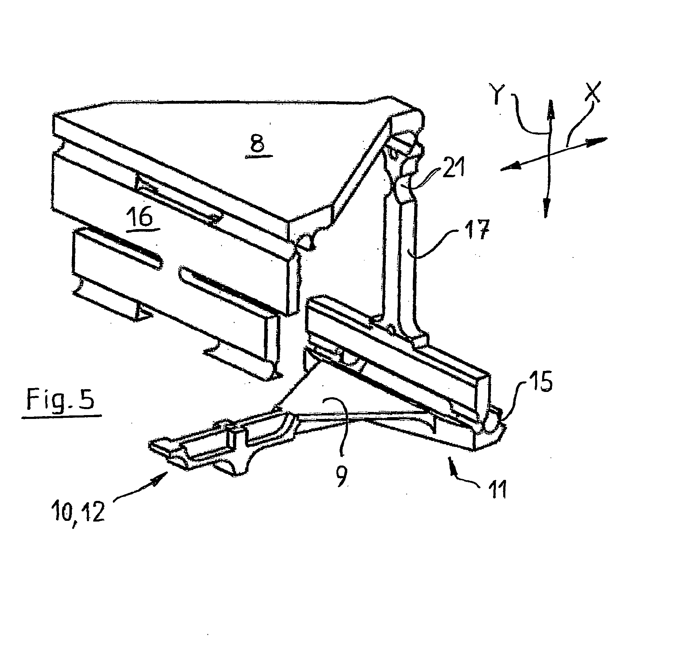

Gemäß einer weiteren Ausführungsform der Erfindung ist eine Feinjustierung zur gezielten Positionierung des gemeinsamen Schwerpunkts aller Ausgleichsgewichte in Y-Richtung und/oder Z-Richtung vorgesehen. Wie anhand Fig. 5 für die Y-Richtung zu sehen sein wird, kann es sich dabei beispielsweise um eine einfache Schraubenvorrichtung handeln.

Der Wägeaufnehmer kann erfindungsgemäß auch rotiert werden. Die Rotation erfolgt dabei vorzugsweise um eine in Y-Richtung verlaufende Achse, die das Zentrum einer kreisförmigen Anordnung mehrerer solcher Wägeaufnehmer bildet. Entsprechend wirken Fliehkräfte auf die Komponenten des Wägeaufnehmers und insbesondere auch auf ein oder mehrere Ausgleichsgewichte, wenn diese - wie vorbeschrieben - vorgesehen sind. Um aus den Fliehkräften der Ausgleichsgewichte resultierende Biegemomente zu vermeiden, ist erfindungsgemäß vorgesehen, den gemeinsamen Schwerpunkt aller Ausgleichsgewichte in Y-Richtung auf der Höhe anzuordnen, auf der der letzte Hebel (auf dem die Gewichte angeordnet sind) gegenüber dem Festland abgestützt ist. Auf diese Weise wirken an der Stützstelle bei einer Rotation des Wägeaufnehmers ausschließlich Fliehkräfte in radialer Richtung, ohne dabei Momente um die Stützstelle zu erzeugen. Ein weiterer neuartiger Verbesserungsschritt für Waagen allgemein lässt sich vorteilhaft mit einer der vorgenannten Ausführungsformen kombinieren, aber grundsätzlich unabhängig davon auch für andere Wägeaufnehmer einsetzen: Dabei ist vorgesehen, , dass der Lastaufnehmer in Y- und/oder Z-Richtung einen Anschlag für den letzten Hebel oder für wenigstens ein an dem letzten Hebel angeordnetes Ausgleichsgewicht aufweist. Im unbelasteten oder überlasteten Zustand des Wägeaufnehmers wird der in Kraftflussrichtung letzte Hebel zu weit ausgelenkt, wenn nicht ein solcher Anschlag vorgesehen ist. Anstatt diesen Anschlag gemäß Stand der Technik am Festland vorzusehen, wird er nun Platz sparend und funktionell unmittelbar an dem Lastaufnehmer ausgebildet, mit dem der entsprechende Hebelarm dann erfindungsgemäß zusammenwirkt. Dabei kann der Hebelarm unmittelbar an der Ausnehmung bzw. einem geeigneten Anschlag innerhalb der Ausnehmung des Lastaufnehmers anschlagen. Alternativ kann auch ein an dem Hebel angeordnetes Ausgleichsgewicht gegen den Lastaufnehmer schlagen, wenn die Belastung oder Entlastung des Wägeaufnehmers dies bewirkt. Im vorliegenden Fall bzw. in Verbindung mit dem erfindungsgemäßen Wägeaufnehmer wird aufgabengemäß Bauraum eingespart, ferner wird der ohnehin vorhandene Lastaufnehmer zusätzlich elegant für die Anschlagfunktion eingesetzt.

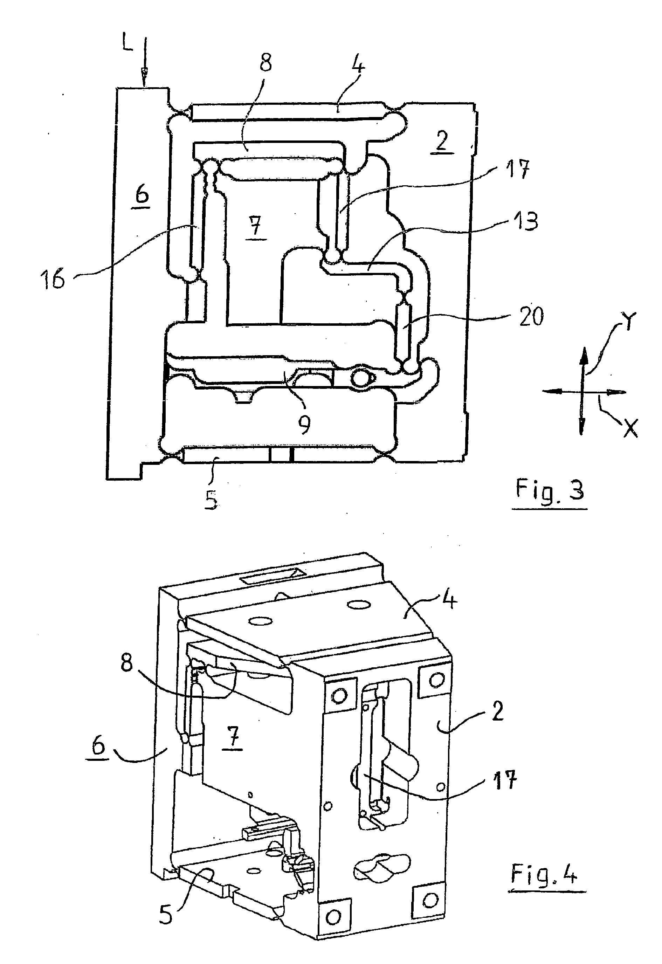

Eine besonders kompakte Bauweise ergibt sich gemäß einer weiteren vorteilhaften Ausführungsform der Erfindung dadurch, dass wenigstens ein Hebel bzw. Hebelteil und/oder wenigstens ein Koppelelement bzw. Koppelelement-Teil in Y-Richtung in wenigstens einer Ausnehmung im vorkragenden Abschnitt des Grundkörpers angeordnet oder durch die Ausnehmung hindurch geführt wird. Der entsprechende Hebel bzw. das Koppelelement muss dann nicht aufgeteilt oder asymmetrisch angeordnet sein, um auf einer oder beiden Seiten des vorkragenden Abschnitts des Grundkörpers zu verlaufen. Stattdessen kann der vorkragenden Abschnitt des Grundkörpers wirkungsmäßig auch umlaufen werden, indem der entsprechende Hebel bzw. das Koppelelement (oder auch nur Teile derselben) vorzugsweise mittig durch die Ausnehmung des Abschnitts hindurchgeführt wird, wie dies in Fig. 4 und 5 gezeigt ist.

Dabei ist auch die Anordnung nur eines Teils eines Hebels in der Ausnehmung möglich. Andererseits können sogar mehrere Hebel in der Ausnehmung untergebracht werden, die erforderlichenfalls zur Kraftübertragung durch Koppelelemente miteinander verbunden sein können.

Die Ausnehmung kann dabei vorteilhaft als vom Grundkörper in X- und Z-Richtung umschlossener Durchbruch ausgebildet sein, so dass der vorkragende Abschnitt (in Z-Richtung gesehen) vor und hinter der Ausnehmung mit dem. Grundkörper verbunden bleibt. Dies erlaubt eine besonders einfache Form des Hebels bzw. Koppelelements sowie eine möglichst breite und verwindungssteife Ausbildung des vorkragenden Abschnitts des Grundkörpers.

Als Koppelelemente nach dieser Anmeldung sind Elemente zu verstehen, die Kräfte vom Lastaufnehmer in einen Hebel oder von einem Hebel auf einen benachbarten Hebel übertragen, also um Kräfte in Kraftflussrichtung bis zum Kraftkompensationssystem zu übertragen. Weiterhin sind Koppelelemente auch solche, die einen Hebel am feststehenden Gründkörper abstützen. In beiden Fällen kann das Koppelelement auch auf eine Dünnstelle reduziert sein, die beispielsweise zwischen zwei unmittelbar aneinandergrenzenden Hebeln angeordnet ist.

Auch wenn beim Betrieb von Wägeaufnehmern grundsätzlich versucht wird, die zu wiegende Last möglichst zentrisch in den Lastaufnehmer einzubringen, lässt sich eine Ecklastigkeit oder asymmetrische Einleitung der zu messenden Gewichtskraft in den Lastaufnehmer nicht immer vermeiden. Dies führt dazu, dass ein Kipp- bzw. Biegemoment in die Koppelelemente bzw. Hebel eingeleitet wird und Messungenauigkeiten hervorruft. Über eine solche Dünnstelle lässt sich ein Biegemoment ausgleichen, wie dies bereits die EP 0 291 258 A2 beschreibt.

Weiterhin ist daher vorgesehen, dass wenigstens ein Koppelelement, welches in Kraftflussrichtung einem Hebel vor- oder nachgeschaltet ist, zur Vermeidung der Weiterleitung von Wiegemomenten eine Dünnstelle aufweist, die sich in Richtung des zu vermeidenden Moments erstreckt. Gemäß eins neuartigen erfinderischen Gedankens kann es sich dabei insbesondere um ein in Kraftflussrichtung nach dem ersten Hebel angeordnetes Koppelelement handeln. Sofern nämlich das in Kraftflussrichtung erste, am Lastaufnehmer angelenkte Koppelelement ohne eine solche Dünnstelle ausgebildet ist, vermag es Kräfte in Y-Richtung in den ersten Hebel einzuleiten, der sie seinerseits über seine Stützstelle weitgehend oder vollständig in den Grundkörper abgibt. Diese Stützstelle kann ebenso wie das erste Koppelelement in Z-Richtung relativ breit ausgebildet sein und insbesondere Zug-/Druck-Kräfte in dieser Richtung gut übertragen, ohne selbst Schaden zu nehmen. Eine in dem nachfolgenden Koppelelement vorgesehene Dünnstelle der vorbeschriebenen Art schließt die Weiterleitung etwaiger verbliebener Momente in X-Richtung dann sicher aus.

Das vorbeschriebene Merkmal lässt sich - unabhängig von den Wägeaufnehmern dieser Anmeldung - grundsätzlich für alle Wägeaufnehmer mit wenigstens zwei Koppelelementen vorsehen. In Verbindung mit den vorbeschriebenen Wägeaufnehmern dieser Anmeldung ergibt sich eine besonders sichere, von Störkräften befreite Kraftübertragung.

Die bisher beschriebenen Ausführungsformen zeichneten sich dadurch aus, dass das Kraftkompensationssystem zwischen den Parallelführungselementen angeordnet war. Nach einer weiteren vorteilhaften Ausführungsform der Erfindung kann das Kraftkompensationssystem jedoch auch oberhalb oder unterhalb der beiden Parallelführungselemente angeordnet sein. Dabei erstreckt sich zur Kraftübertragung in Richtung auf das Kraftkompensationssystem ein Hebel oder Koppelelement durch eine Ausnehmung in einem der Parallelführungselemente oder in dem die beiden Parallelführungselemente tragenden Abschnitt des Grundkörpers. Aus dem kompakten Innenraum des Wägeaufnehmers lassen sich dadurch zumindest die Komponenten des Kraftkompensationssystems herausnehmen und insbesondere oberhalb bzw. unterhalb der Parallelführungselemente anordnen. Dies spart Bauraum zwischen den Parallelführungselementen in Y-Richtung. Ein derart angeordnetes Kraftkompensationssystem ist je nach Ausführungsform leicht zugänglich. Auch außerhalb des durch die Parallelführungselemente definierten Zwischenraums lässt sich das Kraftkompensationssystem in unterschiedlichen Richtungen anordnen. So kann auch hier die Achse der Spule bzw. des Magneten insbesondere in Y- oder in X-Richtung verlaufen. Der in Kraftflussrichtung letzte Hebel kann insbesondere auch wieder ein im Wesentlichen in X-Richtung verlaufender Hebel sein, der an seinem freien Ende die Spule oder den Magneten trägt. Er stützt sich dann bspw. an einer nach oben oder unter gezogenen Verlängerung des die Parallelführungselemente tragenden Grundkörperabschnitts ab.

Zur Kraftweiterleitung in den Bereich außerhalb der Parallelführungselemente kann dabei ein Hebel oder ein Koppelelement eines der Parallelführungselemente durchstoßen. Alternativ kann der Hebel oder das Koppelelement aber auch durch eine Ausnehmung innerhalb des die Parallelführungselemente stützenden Grundkörpers nach oben oder unten geführt werden.

Gemäß einer weiteren vorteilhaften Ausführungsform der Erfindung ist eine Ausnehmung im Lastaufnehmer und/oder Grundkörper (und gegebenenfalls in einem Parallelführungselement) vorgesehen, um wenigstens einen Beschleunigungssensor aufzunehmen. Dieser soll Beschleunigungskräfte in einer oder mehreren Richtungen erfassen und lässt sich durch die erfindungsgemäße Anordnung platzsparend unterbringen. Auch hier wird das Volumen des Lastaufnehmers teilweise für die Unterbringung einer zusätzlichen Komponente verwendet, um dadurch Bauraum einzusparen. Dieser neuartige Gedanke ist auch unabhängig vom Gegenstand der vorliegenden Anmeldung für Wägeaufnehmer mit Lastaufnehmern, Grundkörpern bzw. Parallellenkerstrukturen anwendbar und erspart vorteilhaft zusätzlichen Bauraum, der ohne die Ausnehmung separat vorzusehen wäre.

Weitere vorteilhafte Ausführungsformen ergeben sich aus den Unteransprüchen.

Nachstehend wird die Erfindung anhand von Figurenbeispielen näher erläutert. Dabei zeigen
- Fig. 1: eine schematische und perspektivische Seitenansicht eines erfin- dungsgemäßen Wägeaufnehmers,
- Fig. 2: einen solchen Wägeaufnehmer in einer perspektivischen Seitenan- sicht,
- Fig. 3: einen weiterentwickelten Wägeaufnehmer mit drei Übersetzungshe- beln,
- Fig. 4: einen Wägeaufnehmer in Rückansicht,
- Fig. 5: eine freigeschnittene Hebelanordnung für einen erfindungsgemäßen Wägeaufnehmer , und
- Fig. 6: einen Wägeaufnehmer in Vorderansicht mit Ausnehmungen im Last- aufnehmer.

In Fig. 1 ist ein erfindungsgemäßer Wägeaufnehmer in perspektivischer Ansicht dargestellt. Der Wägeaufnehmer erstreckt sich in die drei zueinander senkrechten Raumrichtungen X, Y und Z. Ein feststehender Grundkörper 3 schließt den Wägeaufnehmer zu einer Seite der X-Richtung ab, während gegenüberliegend ein Lastaufnehmer 6 angeordnet ist, der im Wesentlichen die Begrenzung des Wägeaufnehmers 1 in die entgegengesetzte X-Richtung bildet.

Zwei Parallelführungselemente 4 und 5 verbinden einen Grundkörperabschnitt 2 mit dem Lastaufnehmer 6, so dass dieser in eine Lasteinleitungsrichtung Y beweglich am Grundkörper 3 angelenkt ist. Des Weiteren erstreckt sich der Grundkörper 3 von dem Grundkörperabschnitt 2 in Form eines vorkragenden Abschnitts 7 in den Bereich zwischen den beiden Parallelführungselementen 4, 5. Dieser vorkragende Abschnitt 7 des Grundkörpers 3 dient als Widerlager oder Stützstelle für Hebel bzw. Komponenten des Kraftkompensationssystems, wie noch zu sehen sein wird.

Der in Y-Richtung bewegliche Lastaufnehmer 6 greift über ein Koppelelement 16 an einem ersten Hebel 8 an, der sich auf dem vorkragenden Abschnitt 7 des Grundkörpers 3 abstützt. An dem dem Grundkörper 3 zugewandten Ende des Hebels 8 ist dieser über ein weiteres Koppelelement 17 mit einem weiteren Hebel 9 verbunden, der sich am Abschnitt 2 des Grundkörpers abstützt. Der Hebel 9 erstreckt sich vom Abschnitt 2 in X-Richtung fort in Richtung auf den Lastaufnehmer 6. Im Lastaufnehmer 6 sind Aufnahmen für Komponenten des Kraftkompensationssystems vorgesehen (Magnet M, Spule S oder Positionsdetektionssystem P). Durch geeignete Wahl der Hebelarmlängen der Hebel 8 und 9 ergibt sich eine ausreichend hohe Übersetzung der in den Lastaufnehmer 6 eingeleiteten Last L, um diese in bekannter Weise durch einen entsprechenden Kompensationsstrom in der Spule S auszugleichen.

Zu erkennen ist in Fig. 1 weiterhin, dass die Hebel 8 und 9 bzw. die Koppelelemente 16 und 17 den vorkragenden Abschnitt 7 des Grundkörpers 3 wirkungsmäßig umlaufen und so unter bestmöglicher Nutzung des Bauraums eine hohe Kraftübersetzung ermöglichen.

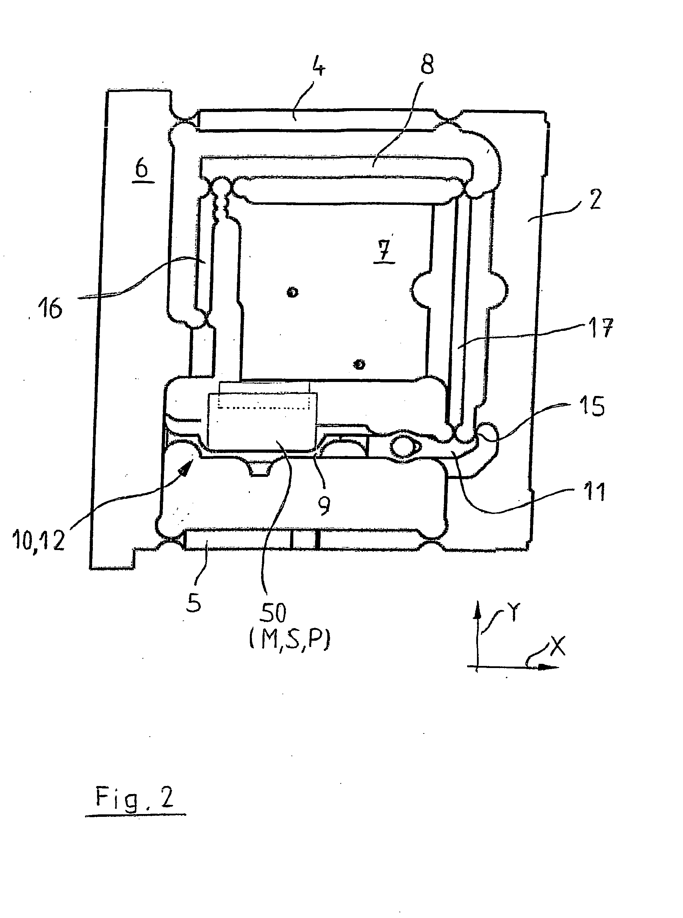

In Fig. 2 ist der erfindungsgemäße Wägeaufnehmer in einer reinen Seitenansicht gezeigt. Zu erkennen ist im rechten Teil der Fig. 2 wieder der Abschnitt 2 des Grundkörpers und der zwischen die Parallelführungselemente 4 und 5 vorkragende Abschnitt 7 des Grundkörpers. Der obere Hebel 8 ist wieder über das Koppelelement 17 mit dem unteren Hebel 9 verbunden. Das Koppelelement 17 verläuft dabei in der Ansicht gemäß Fig. 2 "vor" der Verbindung von Abschnitt 2 mit Abschnitt 7 des Grundkörpers. Das Koppelelement 17 kann auch aufgeteilt sein und zu beiden Seiten des Verbindungsbereichs zwischen Abschnitt 2 und Abschnitt 7 nach unten in Richtung auf den Hebel 9 verlaufen. Auch eine in etwa mittige Führung des Koppelelements 17 ist gemäß Fig. 4 möglich.

Das Koppelelement 17 greift an dem in Kraftflussrichtung letzten Hebel 9 an, dessen erstes Ende 11 über ein Stützstelle 15 an dem Abschnitt 2 des Grundkörpers abgestützt wird, während sich das zweite Ende 12 als freier Hebelarm 10 in Richtung auf den Lastaufnehmer 6 erstreckt und bis in eine Ausnehmung dieses Lastaufnehmers 6 hineinragt.

Auf dem Hebelarm 10 ist schematisch das Kraftkompensationssystem 50 dargestellt, welches einen oder mehrere Magneten M oder Spulen S umfassen kann. Auch ein Positionsdetektionssystem P kann an dem Hebelarm 10 angeordnet sein. Der vorkragende Abschnitt 7 des Grundkörpers dient zur Aufnahme einer zugehörigen Komponente des Kraftkompensationssystems, so dass beispielsweise ein Magnet M vom Hebelarm 10 und eine Spule S vom Abschnitt 7 getragen wird (oder umgekehrt).

Wieder ist zu erkennen, wie die Koppelelemente 16 und 17 bzw. die Hebel 8 und 9 den vorkragenden Abschnitt 7 des Grundkörpers wirkungsmäßig umlaufen, und dass die Komponenten M, S und P des Kraftkompensationssystems 50 in X-Richtung relativ nah am Lastaufnehmer 6 und möglichst weit vom Abschnitt 2 des Grundkörpers beabstandet angeordnet sind.

Fig. 3 zeigt eine weitere Ausführungsform der Erfindung, bei der nunmehr drei Hebel 8, 13 und 9 zur Kraftübersetzung verwendet werden. Wieder wird eine in den Lastaufnehmer 6 eingeleitete Last L über das erste Koppelelement 16 in den Hebel 8 übertragen. Dieser greift über das zweite Koppelelement 17 an dem zweiten Hebel 13 an. Der Hebel 8 und der Hebel 13 werden jeweils über Widerlager am vorkragenden Abschnitt 7 des Grundkörpers abgestützt. Der Hebel 13 greift seinerseits über das Koppelelement 20 an dem Hebel 9 an, der in bekannter Weise am Abschnitt 2 des Grundkörpers abgestützt ist. Die größere Anzahl der Hebel (drei) ermöglicht hier eine Erhöhung des Übersetzungsfaktors. Zu erkennen ist wieder, dass der in Kraftflussrichtung letzte Hebel 9 sich vom Abschnitt 2 des feststehenden Grundkörpers in X-Richtung auf den Lastaufnehmer 6 hin erstreckt, um an seinem freien Ende wieder eine oder mehrere Komponenten des Kraftkompensationssystems 50 aufzunehmen.

In Fig. 4 ist die besondere Führung des zweiten Koppelelements 17 dargestellt. Vom feststehenden Abschnitt 2 des Grundkörpers erstreckt sich der vorkragende Abschnitt 7 im Wesentlichen in voller Breite bzw. der Trapezform folgend in den Bereich zwischen den Parallelführungselementen 4 und 5. Durch eine Ausnehmung am Ansatzbereich des vorkragenden Abschnitts 7 wird das Koppelelement 17 von oberhalb des Abschnitts 7 durch diesen hindurch nach unten geführt, um dort in beschriebener Weise an den nächsten Hebel anzugreifen. Der vorkragende Abschnitt 7 kann in diesem Fall besonders stabil ausgebildet sein, während ein einziges Koppelelement 17 ausreicht, um die Kraft weiterzuleiten und gleichzeitig den vorkragenden Abschnitt wirkungsmäßig zu umlaufen.

In Fig. 5 ist die Ausführungsform der Koppelelemente und Hebel in freigeschnittener perspektivischer Ansicht dargestellt. Zu erkennen ist das Koppelelement 16, welches an seinem unteren freigeschnittenen Ende am nicht dargestellten Lastaufnehmer 6 angreift. Es beaufschlagt den Hebel 8, der seinerseits mit dem Koppelelement 17 verbunden ist. Der Hebel 8 verläuft dabei in X-Richtung verjüngt auf den nicht dargestellten Abschnitt 2 zu. Dort greift er über eine Dünnstelle 21 an dem Koppelelement 17 an. Die Dünnstelle 21 verhindert die Weiterleitung von in X-Richtung gerichteten Biegemomenten. Das Koppelelement 17 durchläuft die in Fig. 4 dargestellte Ausnehmung in Y-Richtung nach unten, wo es wieder verbreitert wird und am ersten Ende 11 des letzten Hebels 9 angreift. Der Hebel 9 ist wieder über die Stützstelle 15 an dem nicht dargestellten Abschnitt 2 des Grundkörpers gestützt.

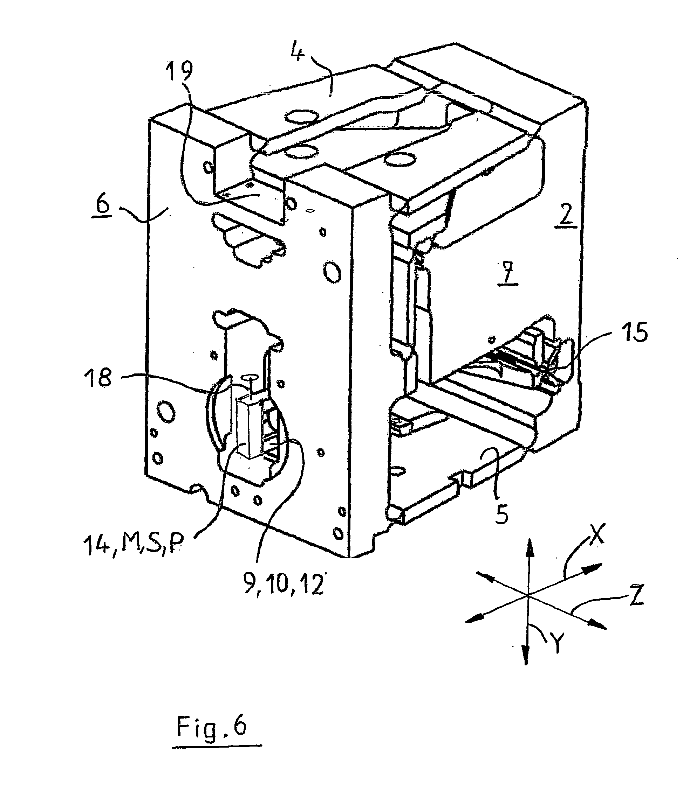

In Fig. 6 ist der Wägeaufnehmer mit weiteren erfindungsgemäßen Merkmalen dargestellt. Zu erkennen ist im oberen Abschnitt des Lastaufnehmers 6 eine Ausnehmung 19, die auch das obere Parallelführungselement 4 in Richtung X durchsetzt. Diese Ausnehmung 19 dient zur Aufnahme mindestens eines Beschleunigungssensors, der dadurch Raum sparend untergebracht werden kann.

Weiterhin zeigt der Lastaufnehmer 6 eine darunter liegende weitere Ausnehmung, in welche der Hebel 9 mit seinem zweiten Ende 12, vom Abschnitt 2 kommend, hineinragt. Durch diese Aussparung ist es möglich, den Hebelarm des in Kraftflussrichtung letzten Hebels bestmöglich zu verlängern, um dadurch die Übersetzungsleistung zu erhöhen. Anstatt die Komponenten des Kraftkompensationssystems 50 (Magnet M, Spule S, Positionsdetektionssystem P) im Bereich zwischen Lastaufnehmer 6 und Abschnitt 2 anzuordnen, können diese Komponenten sogar bis in den Bereich der gezeigten Ausnehmung des Lastaufnehmers 6 vorgezogen werden, um dadurch den Bauraum optimal zu nutzen. Insbesondere auch das Positionsdetektionssystem P lässt sich hier leicht unterbringen und justieren.

Ergänzend oder alternativ lässt sich in dieser oder auch einer weiteren Ausnehmung im Lastaufnehmer 6 auch wenigstens ein Ausgleichsgewicht 14 anordnen, welches auf dem Hebel 9 angebracht ist. In dieser Lage ist das Ausgleichsgewicht 14 leicht zu montieren. Darüber hinaus kann der Lastaufnehmer 6 vorteilhaft einen Anschlag für das Ausgleichsgewicht 14 aufweisen, um den Wägeaufnehmer bei Überlast oder in Ruhelage zu entlasten. Weiterhin kann im Bereich der Ausnehmung des Lastaufnehmers auch eine Feinjustierung 18 vorgesehen sein, mit der der Schwerpunkt des Ausgleichgewichts (auch mehrere solche Gewichte sind denkbar) insgesamt einstellbar ist, und zwar insbesondere im Bezug auf die Stützstelle 15 des Hebels 9.

Eine ansatzweise runde Ausnehmung im Lastaufnehmer 6 erlaubt die Verwendung eines ebenfalls etwa kreisförmigen Ausgleichsgewichts, wobei die Ausnehmung dann als Anschlag dienen kann, der in Y- und in Z-Richtung wirkt.

## Patentansprüche

1. Wägeaufnehmer (1), vorzugsweise monolithisch, für eine elektronische Waage nach dem Prinzip der elektromagnetischen Kraftkompensation, mit Ausdehnungen in eine erste Richtung (X), eine dazu vorzugsweise senkrechte Richtung (Y) und eine zu den Richtungen (X) und (Y) senkrechte Richtung (Z), mit wenigstens einem elektromagnetischen Kraftkompensationssystem (50), welches eine Spule (S) und/oder einen Magneten (M) und/oder ein Teil eines Positionsdetektionssystems (P) umfasst, und
a) mit einem feststehenden Grundkörper (3) und einem Grundkörperabschnitt (2) an dem Parallelführungselemente (4, 5) angelenkt sind, die sich im wesentlichen längs der Richtung (X) erstrecken und einen in die Messrichtung (Y) beweglichen Lastaufnehmer (6) relativ zum Grundkörper (3) führen,
b) wobei wenigstens zwei Hebel (8, 9) und wenigstens ein Koppelelement (16, 17) als Reihe von wirkungsmäßig hintereinander geschalteten Elementen vorgesehen sind, wobei die Elemente zur Übertragung und/oder Übersetzung einer auf den Lastaufnehmer (6) einwirkenden Last und zu deren Weiterleitung zu dem Kraftkompensationssystem (50) hin ausgebildet sind, und
c) wobei an einem Hebelarm (10) des letzten Hebels (9) der Reihe eine Komponente (M, S, oder P) des wenigstens einen Kraftkompensationssystems (50) angeordnet ist,
**dadurch gekennzeichnet,**
d) **dass** wenigstens eine Komponente (M, S oder P) in X-Richtung näher an dem Lastaufnehmer (6) als an dem Grundkörperabschnitt (2) angeordnet ist, und
e) **dass** die Reihe aus Hebeln (8, 9) und wenigstens einem Koppelelement (16, 17) einen zwischen die Parallelführungselemente (4, 5) hervorkragender Abschnitt (7) des Grundkörpers (3) wirkungsmäßig umläuft.

2. Wägeaufnehmer (1) nach Anspruch 1, **dadurch gekennzeichnet, dass** der zweite oder ein in Kraftflussrichtung nachfolgend angeordneter Hebel (9) sich von seinem ersten, dem Grundkörperabschnitt (2) zugewandten Ende (11) im wesentlichen in X-Richtung zu einem zweiten, dem Lastaufnehmer (6) zugewandten Ende (12) hin erstreckt, wobei dieser Hebel (9) in Kraftflussrichtung der letzte ist, der sich im wesentlichen in X-Richtung erstreckt.

3. Wägeaufnehmer (1) nach einem der vorigen Ansprüche, **dadurch gekennzeichnet, dass** in Kraftflussrichtung wenigstens ein Winkelhebel (13) vorgesehen ist.

4. Wägeaufnehmer (1) nach einem der vorigen Ansprüche, **dadurch gekennzeichnet, dass** der in Kraftflussrichtung letzte Hebel (9) ein Winkelhebel ist, der an dem vorkragenden Abschnitt (7) des Grundkörpers (3) abgestützt ist.

5. Wägeaufnehmer (1) nach einem der vorigen Ansprüche, **dadurch gekennzeichnet, dass** der letzte Hebel (9) in eine Ausnehmung des Lastaufnehmers (6) hineinragt oder durch die Ausnehmung hindurchragt.

6. Wägeaufnehmer (1) nach dem vorhergehenden Anspruch, **dadurch gekennzeichnet, dass** wenigstens eine Komponente (M, S, P) des Kraftkompensationssystems (50) in eine Ausnehmung des Lastaufnehmers (6) hineinragt oder durch die Ausnehmung hindurchragt.

7. Wägeaufnehmer (1) nach einem der vorigen Ansprüche, **dadurch gekennzeichnet, dass** der vorkragende Abschnitt (7) des Grundkörpers (3) bis in oder durch eine Ausnehmung des Lastaufnehmers (6) geführt wird.

8. Wägeaufnehmer (1) nach einem der vorigen Ansprüche, **dadurch gekennzeichnet, dass** das Positionsdetektionssystem (P) zur Ermittlung einer Auslenkung des letzten Hebels (9) in einer Ausnehmung des Lastaufnehmers (6), an dem vorkragenden Abschnitt (7) des Grundkörpers (3) oder an einem Magneten (M) oder einer Spule (S) angeordnet ist.

9. Wägeaufnehmer (1) nach einem der vorigen Ansprüche, **dadurch gekennzeichnet, dass** der letzte Hebel (9) zur Aufnahme wenigstens eines vorzugsweise rotationssymmetrischen Ausgleichsgewichts (14) ausgebildet ist, wobei das einzige oder von mehreren Ausgleichsgewichten wenigstens eines in eine Ausnehmung des Lastaufnehmers (6) hineinragt.

10. Wägeaufnehmer (W) nach dem vorhergehenden Anspruch, **dadurch gekennzeichnet, dass** der gemeinsame Schwerpunkt aller Ausgleichsgewichte (14) in Y-Richtung auf der gleichen Höhe angeordnet ist wie die Stützstelle (15), über die sich der letzte Hebel (9) am Grundkörper (3) abstützt.

11. Wägeaufnehmer (W) nach einem der beiden vorhergehenden Ansprüche, **dadurch gekennzeichnet, dass** eine Feinjustierung (18) zur gezielten Positionierung des gemeinsamen Schwerpunkts aller Ausgleichsgewichte (14) in Y-Richtung vorgesehen ist.

12. Wägeaufnehmer (1) nach einem der vorigen Ansprüche, **dadurch gekennzeichnet, dass** der Lastaufnehmer (6) in Y-Richtung und/oder in Z-Richtung einen Anschlag für den letzten Hebel oder für wenigstens ein an dem letzten Hebel angeordnetes Ausgleichsgewicht aufweist.

13. Wägeaufnehmer (W) nach einem vorigen Ansprüche, **dadurch gekennzeichnet, dass** wenigstens ein Hebel oder ein Teil eines Hebels und/oder wenigstens ein Koppelelement oder ein Teil eines Koppelelements in Y-Richtung in wenigstens einer Ausnehmung im vorkragenden Abschnitt (7) des Grundkörpers (3) angeordnet oder durch die Ausnehmung hindurch geführt ist.

14. Wägeaufnehmer (W) nach einem der vorigen Ansprüche, **dadurch gekennzeichnet, dass** das wenigstens eine Koppelelement (16, 17), welches in Kraftflussrichtung einem Hebel (8, 9) vor- oder nachgeschaltet ist, zur Vermeidung der Weiterleitung von Biegemomenten eine Dünnstelle aufweist, die sich in Richtung des zu vermeidenden Moments erstreckt.

15. Wägeaufnehmer (W) nach einem der vorigen Ansprüche, **dadurch gekennzeichnet, dass** das Kraftkompensationssystem (50) wenigstens teilweise zwischen den Parallelführungselementen (4, 5) angeordnet ist.

16. Wägeaufnehmer (W) nach einem der Ansprüche 1 bis 14, **dadurch gekennzeichnet, dass** das Kraftkompensationssystem (50) oberhalb oder unterhalb der beiden Parallelführungselemente (4, 5) angeordnet ist, wobei sich zur Kraftübertragung in Richtung auf das Kraftkompensationssystem (50) ein Hebel oder ein zwei Hebel verbindendes Koppelelement durch eine Ausnehmung in einem Parallelführungselement (4, 5) oder in dem Abschnitt (2) des Grundkörpers (3) erstreckt.

17. Wägeaufnehmer (W) nach einem der vorigen Ansprüche, **dadurch gekennzeichnet, dass** in einer Ausnehmung (19) des Lastaufnehmers (6) und/oder eines Parallelführungselements (4, 5) ein Beschleunigungssensor angeordnet ist.

18. Wägeaufnehmer (W) nach einem der vorigen Ansprüche, **dadurch gekennzeichnet, dass** der Wägeaufnehmer zur kreisförmigen Anordnung mehrerer solcher Wägeaufnehmer in Draufsicht trapezförmig ausgebildet ist.

## Claims

1. A weighing sensor (1), preferably monolithic, for an electronic balance according to the principle of electromagnetic force compensation, with expansions in a first direction (X), a direction (Y) that is preferably perpendicular thereto, and a direction (Z) that is perpendicular to the directions (X) and (Y), having at least one electromagnetic force-compensation system (50) which comprises a coil (S) and/or a magnet (M) and/or a portion of a position-detection system (P), and
a) having a fixed base body (3) and a base-body section (2) on which parallel-guide elements (4, 5) are articulated that extend substantially along the direction (X) and guide a load-sensor (6), which can be moved in the measuring direction (Y), relative to the base body (3),
b) wherein at least two levers (8, 9) and at least one coupling element (16, 17) are provided as a series of elements that are effectively connected one after the other, wherein the elements are formed for the transfer and/or transmission of a load acting on the load-sensor (6) and for the relaying thereof towards the force-compensation system (50), and
c) wherein arranged on a lever arm (10) of the last lever (9) of the series there is a component (M, S, or P) of the at least one force-compensation system (50), **characterised in that**
d) at least one component (M, S or P) in the X-direction is arranged closer to the load-sensor (6) than to the base-body section (2), and
e) the series of levers (8, 9) and at least one coupling element (16, 17) effectively go round a section (7) of the base body (3) that protrudes between the parallel-guide elements (4, 5).

2. A weighing sensor (1) according to claim 1, **characterised in that** the second or a lever (9) that is arranged downstream in the direction of force flux extends from its first end (11) facing the base-body section (2) substantially in the X-direction towards a second end (12) facing the load-sensor (6), this lever (9) being the last in the direction of force flux that extends substantially in the X-direction.

3. A weighing sensor (1) according to one of the previous claims, **characterised in that** at least one angle lever (13) is provided in the direction of force flux.

4. A weighing sensor (1) according to one of the previous claims, **characterised in that** the last lever (9) in the direction of force flux is an angle lever that is supported on the protruding section (7) of the base body (3).

5. A weighing sensor (1) according to one of the previous claims, **characterised in that** the last lever (9) projects into a recess of the load-sensor (6) or projects through the recess.

6. A weighing sensor (1) according to the preceding claim, **characterised in that** at least one component (M, S, P) of the force-compensation system (50) projects into a recess of the load-sensor (6) or through the recess.

7. A weighing sensor (1) according to one of the previous claims, **characterised in that** the protruding section (7) of the base body (3) is guided as far as into or through a recess of the load-sensor (6).

8. A weighing sensor (1) according to one of the previous claims, **characterised in that** the position-detection system (P) for determining a deflection of the last lever (9) is arranged in a recess of the load-sensor (6), on the protruding section (7) of the base body (3) or on a magnet (M) or a coil (S).

9. A weighing sensor (1) according to one of the previous claims, **characterised in that** the last lever (9) is formed to receive at least one preferably rotationally symmetrical counterbalance weight (14), wherein the single or at least one of a plurality of counterbalance weights projects into a recess of the load-sensor (6).

10. A weighing sensor (W) according to the preceding claim, **characterised in that** the common centre of gravity of all the counterbalance weights (14) in the Y-direction is arranged at the same height as the point of support (15) by way of which the last lever (9) is supported on the base body (3).

11. A weighing sensor (W) according to one of the two preceding claims, **characterised in that** a fine adjustment (18) is provided for the controlled positioning of the common centre of gravity of all the counterbalance weights (14) in the Y-direction.

12. A weighing sensor (1) according to one of the previous claims, **characterised in that** the load-sensor (6) in the Y-direction and/or in the Z-direction has a stop for the last lever or for at least one counterbalance weight that is arranged on the last lever.

13. A weighing sensor (W) according to one [of the] previous claims, **characterised in that** at least one lever or a portion of a lever and/or at least one coupling element or a portion of a coupling element in the Y-direction is arranged in at least one recess in the protruding section (7) of the base body (3) or is guided through the recess.

14. A weighing sensor (W) according to one of the previous claims, **characterised in that** the at least one coupling element (16, 17), which is connected upstream or downstream of a lever (8, 9) in the direction of force flux, has in order to avoid the relaying of bending moments a thin point that extends in the direction of the moment that is to be avoided.

15. A weighing sensor (W) according to one of the previous claims, **characterised in that** the force-compensation system (50) is arranged at least in part between the parallel-guide elements (4, 5).

16. A weighing sensor (W) according to one of claims 1 to 14, **characterised in that** the force-compensation system (50) is arranged above or below the two parallel-guide elements (4, 5), wherein for the purposes of transfer of force in the direction of the force-compensation system (50) a lever or a coupling element connecting two levers extends through a recess in a parallel-guide element (4, 5) or in the section (2) of the base body (3).

17. A weighing sensor (W) according to one of the previous claims, **characterised in that** an acceleration sensor is arranged in a recess (19) of the load-sensor (6) and/or a parallel-guide element (4, 5).

18. A weighing sensor (W) according to one of the previous claims, **characterised in that** the weighing sensor is formed in a trapezoidal manner in a plan view for the circular arrangement of a plurality of such weighing sensors.

## Revendications

1. Capteur de pesée (1), de préférence monolithique, pour une balance électronique selon le principe de la compensation électromagnétique de forces, avec des dimensions dans une première direction (X), une direction (Y) qui est de préférence perpendiculaire à ladite première direction (X) et une direction (Z) perpendiculaire aux directions (X) et (Y), avec au moins un système de compensation électromagnétique de forces (50) qui comprend une bobine (S) et/ou un aimant (M) et/ou une partie d'un système de détection de position (P), et a) avec un corps de base fixe (3) et une section de corps de base (2), sur laquelle sont articulés des éléments de guidage parallèles (4, 5), qui s'étendent sensiblement le long de la direction (X) et guident un capteur de charge (6) mobile dans la direction de mesure (Y) par rapport au corps de base (3),
b) dans lequel au moins deux leviers (8, 9) et au moins un élément de couplage (16, 17) sont prévus sous la forme d'une série d'éléments raccordés l'un derrière l'autre de manière fonctionnelle, les éléments étant conformés pour transférer et/ou traduire une charge agissant sur le capteur de charge (6) et la communiquer au système de compensation de forces (50), et
c) dans lequel un composant (M, S ou P) du au moins un système de compensation de forces (50) est aménagé sur un bras de levier (10) du dernier levier (9) de la série,
**caractérisé en ce que**
d) au moins un composant (M, S ou P) est agencé dans la direction X plus près du capteur de charge (6) que de la section de corps de base (2), et
e) la série de leviers (8, 9) et d'au moins un élément de couplage (16, 17) fait circuler de manière fonctionnelle une section (7) du corps de base (3) faisant saillie entre les éléments de guidage parallèles (4, 5).

2. Capteur de pesée (1) selon la revendication 1, **caractérisé en ce que** le second levier ou un levier (9) agencé à la suite dans le sens du flux de forces s'étend de sa première extrémité (11) tournée vers la section de corps de base (2) sensiblement dans la direction X vers une seconde extrémité (12) tournée vers le capteur de charge (6), ce levier (9) étant le dernier dans le sens du flux de forces qui s'étend sensiblement dans la direction X.

3. Capteur de pesée (1) selon l'une quelconque des revendications précédentes, **caractérisé en ce qu'**il est prévu dans le sens du flux de forces au moins un levier coudé (13).

4. Capteur de pesée (1) selon l'une quelconque des revendications précédentes, **caractérisé en ce que** le dernier levier (9) dans le sens du flux de forces est un levier coudé qui s'appuie sur la section saillante (7) du corps de base (3).

5. Capteur de pesée (1) selon l'une quelconque des revendications précédentes, **caractérisé en ce que** le dernier levier (9) pénètre dans un évidement du capteur de charge (6) ou traverse l'évidement.

6. Capteur de pesée (1) selon la revendication précédente, **caractérisé en ce qu'**au moins un composant (M, S, P) du système de compensation de forces (50) pénètre dans un évidement du capteur de charge (6) ou traverse l'évidement.

7. Capteur de pesée (1) selon l'une quelconque des revendications précédentes, **caractérisé en ce que** la section saillante (7) du corps de base (3) est guidée jusque dans un évidement du capteur de charge (6) ou à travers celui-ci.

8. Capteur de pesée (1) selon l'une quelconque des revendications précédentes, **caractérisé en ce que** le système de détection de position (P) servant à déterminer un déplacement du dernier levier (9) dans un évidement du capteur de charge (6), est agencé sur la section saillante (7) du corps de base (3) ou sur un aimant (M) ou une bobine (S).

9. Capteur de pesée (1) selon l'une quelconque des revendications précédentes, **caractérisé en ce que** le dernier levier (9) est conformé pour recevoir au moins un contrepoids d'équilibre (14) de préférence à symétrie de rotation, le contrepoids d'équilibre unique ou l'un d'entre plusieurs contrepoids d'équilibre pénétrant dans un évidement du capteur de charge (6).

10. Capteur de pesée (W) selon la revendication précédente, **caractérisé en ce que** le centre de gravité commun de tous les contrepoids d'équilibre (14) est agencé dans la direction Y à la même hauteur que le point d'appui (15), par le biais duquel le dernier levier (9) s'appuie sur le corps de base (3).

11. Capteur de pesée (W) selon l'une quelconque des deux revendications précédentes, **caractérisé en ce qu'**il est prévu un ajustement fin (18) pour le positionnement adéquat du centre de gravité commun de tous les contrepoids d'équilibre (14) dans la direction Y.

12. Capteur de pesée (1) selon l'une quelconque des revendications précédentes, **caractérisé en ce que** le capteur de charge (6) présente, dans la direction Y et/ou dans la direction Z, une butée pour le dernier levier ou pour au moins un contrepoids d'équilibre agencé sur le dernier levier.

13. Capteur de pesée (W) selon l'une quelconque des revendications précédentes, **caractérisé en ce qu'**au moins un levier ou une partie d'un levier et/ou au moins un élément de couplage ou une partie d'un élément de couplage est agencé(e) dans la direction Y dans au moins un évidement de la section saillante (7) du corps de base (3) ou est guidé(e) à travers l'évidement.

14. Capteur de pesée (W) selon l'une quelconque des revendications précédentes, **caractérisé en ce que** le au moins un élément de couplage (16, 17), qui est monté en amont ou en aval, dans le sens du flux de forces, d'un levier (8, 9), présente, pour éviter la communication de couples de friction, une zone mince qui s'étend dans la direction du couple à éviter.

15. Capteur de pesée (W) selon l'une quelconque des revendications précédentes, **caractérisé en ce que** le système de compensation de forces (50) est agencé au moins en partie entre les éléments de guidage parallèles (4, 5).

16. Capteur de pesée (W) selon l'une quelconque des revendications 1 à 14, **caractérisé en ce que** le système de compensation de forces (50) est agencé au-dessus ou au-dessous des deux éléments de guidage parallèles (4, 5), dans lequel un levier ou un élément de couplage raccordant deux leviers s'étend à travers un évidement dans un des éléments de guidage parallèles (4, 5) ou dans la section (2) du corps de base (3) pour le transfert de forces en direction du système de compensation de forces (50).

17. Capteur de pesée (W) selon l'une quelconque des revendications précédentes, **caractérisé en ce qu'**un capteur d'accélération est agencé dans un évidement (19) du capteur de charge (6) et/ou d'un élément de guidage parallèle (4, 5).

18. Capteur de pesée (W) selon l'une quelconque des revendications précédentes, **caractérisé en ce que** le capteur de pesée se présente sous la forme d'un trapèze en vue de dessus pour l'agencement circulaire de plusieurs de ces capteurs de pesée.
